Europäisches Patentamt

European Patent Office

Office européen des brevets

(11) Publication number: **0 316 984 B1**

# EUROPEAN PATENT SPECIFICATION

(45) Date of publication of patent specification: **13.05.92** (51) Int. Cl.⁵: **B60R 19/24**, B62D 21/15

(21) Application number: **88202432.6**

(22) Date of filing: **01.11.88**

(54) **Vehicle having a reinforced longitudinal girder.**

(30) Priority: **19.11.87 NL 8702760**

(43) Date of publication of application:
**24.05.89 Bulletin 89/21**

(45) Publication of the grant of the patent:
**13.05.92 Bulletin 92/20**

(84) Designated Contracting States:
**AT BE CH DE ES FR GB IT LI LU NL SE**

(56) References cited:
**EP-A- 0 234 003
DE-A- 2 357 042
DE-A- 2 607 394
FR-A- 1 573 096**

(73) Proprietor: **Volvo Car B.V.
Steenovenweg 1
NL-5708 HN Helmond(NL)**

(72) Inventor: **van Rooij, Arnoldus J. M.
Hoog Geldrop 104
NL-5663 BH Geldrop(NL)**

(74) Representative: **Timmermans, Anthonius
C.Th., Ir. et al
European Patent Attorneys Octrooibureau
Zuid P.O. Box 2287
NL-5600 CG Eindhoven(NL)**

## Description

The invention relates to a plastically deformable chassis part of a vehicle, comprising a hollow sheet metal longitudinal girder with an open end, whereby the chassis part also comprises a rod fixed to a bumper of the vehicle and extending substantially parallel to the centre line of the longitudinal girder, the rod extending through the open end into the hollow longitudinal girder, the rod has a head extending into the longitudinal girder.

The invention furthermore relates to a vehicle provided with such a chassis part.

In the car industry the requirements that are made of the safety of the occupants of a vehicle are gradually becoming stricter, in particular with regard to the safety in case of collisions. This forces the constructors of chassis or chassisless bodies of vehicles to meet these requirements, on the one hand by using mechanically stronger and/or more complicated, and therefore generally costlier constructions, whilst on the other hand said constructions must remain reasonably priced.

Such a plastically deformable chassis part according to the preamble of claim 1 is known from DE-A-2357042 disclosing the chassis part being provided with hydraulic means with a movable rod extending into the hollow girder, whereby the girder is fixed in the plastically deformable chassis part.

Such a known plastically deformable chassis part is complicated and costly.

The purpose of the invention is to provide a cheap and simply assembled chassis part which effectively absorbs the impact energy in a manner which is safe for the occupant.

According to the invention the plastically deformable chassis part is characterized in that the head is provided with an end constructed as a flat plate with a circumferential edge projecting from the circumference of the rod.

Advantageous is that in case of a collision the rod further penetrating into the lonitudinal girder automatically guides the compression and deformation of the chassis part into the longitudinal direction of the longitudinal girder, as a result of which the impact energy is optimally absorbed, without the chassis part having to be provided with crushable zones or blanks for this purpose. As a result the chassis part according to the invention is less costly.

The advantage of the simple embodiment is that the projecting circumferential edge is bent over when the end penetrates the longitudinal girder, thus realising an effective guiding operation.

Moreover, with an optimum absorption of impact energy the degree of reproducibility in the course of deformations appears to be very high in case of a collision of a vehicle provided with the chassis part according to the invention, as a result of which the chance that doors are stuck after a collision has been reduced, which will benefit the accessibility and the safety of the occupants. Collision tests carried out in practice have furthermore shown that by using the chassis part according to the invention the vehicle meets the safety requirements which especially in some countries are very strict.

The invention will be further explained with reference to the drawing, in which the same reference numbers indicate corresponding elements. In the drawing:

fig 1 is a longitudinal section of a chassis part according to the invention; and

fig 2 is a perspective drawing of a vehicle provided with a chassis part according to fig 1.

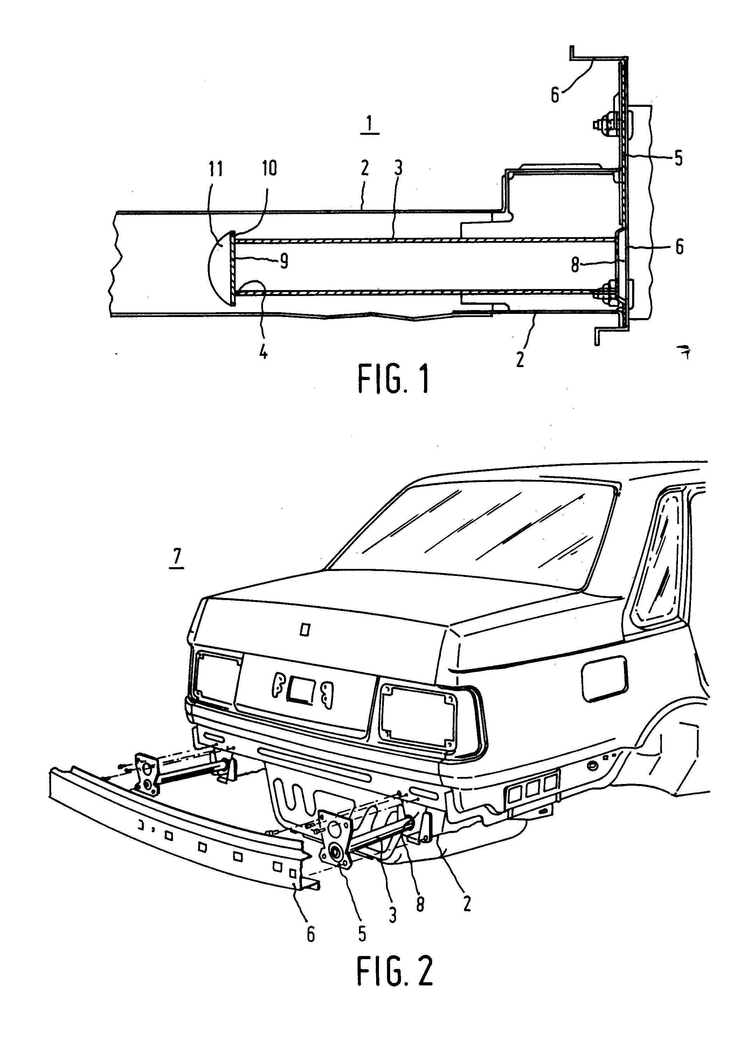

Fig 1 is a longitudinal section of the chassis part 1. The chassis part 1 comprises a hollow sheet metal longitudinal girder 2 and a rod 3. A head 4 of the rod 3 extends into the longitudinal girder 2. The other end of the rod 3 is fixed to a plate 5 to which a bumper or a bumper support 6 is fixed.

Fig 2 is a perspective drawing of a vehicle 7 provided with the chassis part 1. The figure illustrates a possible arrangement in pairs of the chassis part 1 at the rear side of the vehicle 7. The rod 3 extends directly into the hollow longitudinal girder 2 through an open end 8.

When as a result of a collision the longitudinal girder 2 and the bumper support 6 are compressed the rod 3 further penetrates the hollow longitudinal girder 2. During penetration the longitudinal girder is crushed in a manner controlled by the penetrating rod 3. The rod 3 penetrating in case of a collision prevents that the crushing longitudinal girder 2 buckles in transverse direction, as a result of which the impact energy would not be absorbed optimally. Moreover, the danger that might arise in case said buckling parts would penetrate the luggage/passenger compartment has been reduced in a simple manner. In such a case the energy is namely absorbed by other parts of the vehicle whose behaviour in absorbing impact energy will generally be unpredictable. If desired the longitudinal girder 2 may be provided with crushable zones, but this is by no means necessary.

Because impact energy is absorbed by the longitudinal girder the chance that the doors do not become stuck after a collision will be greater, which further increases the safety of the occupants. Advantageous is that for a good guiding operation of the rod 3 a high positioning accuracy of the rod 3 in the longitudinal girder 2 is not required. As a result the construction explained is not only simple but it can also be provided to the vehicle 1 in a simple manner.

In fig 1 a further embodiment of the head 4 of the rod 3 is illustrated. In this embodiment the head 4 is provided with an end 9 which is constructed as a plate having a circumferential edge 10 projecting from the circumference of the rod 3. The advantage of this simple embodiment is that the projecting circumferential edge 10 is bent over when the end 9 penetrates the longitudinal girder 2, thus realising an effective guiding operation. An end 9 may also be constructed as a convex-shaped end part 11, which may join the circumferential edge 10 in a manner as illustrated in fig. 1. The end 9 is generally shaped such that when the longitudinal girder 2 is compressed substantially in longitudinal direction the penetrating head 4 of the rod will remain inside the longitudinal girder 2.

## Claims

1. Plastically deformable chassis part (1) of a vehicle, comprising a hollow sheet metal longitudinal girder (2) with an open end (8), whereby the chassis part also comprises a rod (3)
   - fixed to a bumper (6) of the vehicle,
   - extending substantially parallel to the centre line of the girder (2),
   - extending through the open end (8) into the hollow girder (2), and having a head (4) extending into the girder (2), characterized in that the head (4)
   - is provided with an end (9) constructed as a flat plate with a circumferential edge (10) projecting from the circumference of the rod (3).

2. Chassis part according to claim 1, characterized in that the head (4) is kept clear from the girder (2).

3. Chassis part according to claim 1 or 2, characterized in that the end (9) is provided with a confex shaped end part (11).

4. Chassis part according to any of the claims 1-3, characterized in that the rod (3) is made of steel.

5. Vehicle provided with a chassis part according to any of the claims 1-4.

## Revendications

1. Zone plastique déformable du châssis (1) d'une voiture composée d'un longeron creux en tôle (2) à une extrémité ouverte (8), la zône de châssis étant également composée d'une barre (3),
   - fixée à un pare-chocs (6) de la voiture,
   - suivant de façon réellement parallèle l'axe du longeron (2),
   - traversant l'extrémité ouverte (8) et pénétrant dans le longeron creux (2) et ayant une tête (4) entrant dans le longeron (2) caractérisée par le fait que la tête (4)
   - est pourvue d'une extrémité (9) construite comme une plaque plate à bord circonférentiel (10) faisant saillie de la circonférence de la barre (3).

2. Zone de châssis selon revendication 1, caractérisée par le fait que la tête ne touche pas le longeron (2).

3. Zone de châssis selon revendication 1 ou 2, caractérisée par le fait que l'extrémité (9) est pourvue d'un bout convexe (11).

4. Zone de châssis selon l'une des revendications 1-3, caractérisée par le fait que la barre (3) est fabriquée en acier.

5. Voiture ayant une zone de châssis selon l'une des revendications 1-4.

## Patentansprüche

1. Ein plastisch verformbarer Fahrgestellteil (1) eines Fahrzeuges, bestehend aus einem hohlen Längsbalken (2) aus Stahlblech mit offenem Ende (8), wobei der Fahrgestellteil auch eine Stange (3) umfaßt,
   - auf einer Stoßstange (6) des Fahrzeuges befestigt,
   - sich im wesentlichen parallel zur Mittellinie des Balkens (2) erstreckend,
   - durch das offene Ende (8) in den hohlen Balken (2) hineinragend und mit einer Spitze (4) im Balken (2), dadurch gekennzeichnet, daß die Spitze (4)
   - ein Ende (9) hat, das als flache Platte konstruiert ist, rundherum mit einem Rand (10) versehen, der über die Umrandung der Stange (3) hinausragt.

2. Ein Fahrgestellteil gemäß Anspruch 1, dadurch gekennzeichnet, daß die Spitze (4) den Balken (2) nicht berührt.

3. Ein Fahrgestellteil gemäß Ansprüchen 1 oder 2, dadurch gekennzeichnet, daß das Ende (9) mit einem konvexförmigen Endteil (11) versehen ist.

4. Ein Fahrgestellteil gemäß einem der Ansprüchen 1-3, dadurch gekennzeichnet, daß die Stange (3) aus Stahl gefertigt ist.

5. Ein Fahrzeug, das mit einem Fahrgestellteil gemäß einem der Ansprüche 1-4 ausgestattet ist.

FIG. 1

FIG. 2